Europäisches Patentamt

European Patent Office

Office européen des brevets

(19)

(11) Veröffentlichungsnummer: **0 047 000**
**B1**

## (12) EUROPÄISCHE PATENTSCHRIFT

(45) Veröffentlichungstag der Patentschrift:
**06.02.85**

(51) Int. Cl.⁴: **B 23 K 9/28**, B 23 K 9/02

(21) Anmeldenummer: **81106739.6**

(22) Anmeldetag: **28.08.81**

(54) **Verstellbaugruppe des drehbaren Brennerkopfes einer elektrischen Schweisspistole.**

(30) Priorität: **29.08.80 DE 3032602**

(43) Veröffentlichungstag der Anmeldung:
**10.03.82 Patentblatt 82/10**

(45) Bekanntmachung des Hinweises auf die Patenterteilung:
**06.02.85 Patentblatt 85/6**

(84) Benannte Vertragsstaaten:
**CH FR GB IT LI NL**

(56) Entgegenhaltungen:
**DE - A - 2 702 303**
**FR - A - 2 086 954**
**FR - A - 2 116 741**
**GB - A - 1 385 588**

(73) Patentinhaber: **Reeh, Mathilde,**
**Adalbert-Stifter-Strasse 1, D-8034 Germering (DE)**

(72) Erfinder: **Reeh, Holger, Adalbert-Stifter-Strasse 1,**
**D-8034 Germering (DE)**
Erfinder: **Geiss, Josef, Otto-Hahn-Strasse 1,**
**D-8013 Haar (DE)**

(74) Vertreter: **Patentanwälte Viering & Jentschura,**
**Steinsdorfstrasse 6, D-8000 München 22 (DE)**

## Beschreibung

Die Erfindung bezieht sich auf eine Verstellbaugruppe des drehbaren Brennerkopfes einer elektrischen Schweisspistole, gemäss dem einleitenden Teil des Anspruchs 1.

Derartige Schweisspistolen dienen zum Einschweissen von Rohren in Rohrböden von Hand, wobei sich der Brennerkopf um die Rohrachse dreht. Zu diesem Zweck können auch Ständerschweissmaschinen mit drehbarem Brennerkopf verwendet werden, wenn das Rohreinschweissen automatisch durchgeführt werden soll. Bei einer bekannten derartigen Ständerschweissmaschine (DE-A 2 702 303) ist der Brennerhalter, der die Schweisselektroden und eine für das Verschweissen mit einem Schweisszusatzdraht an der Schweisselektrodenspitze mündende Zusatzdrahtdüse aufweist, auf einer senkrecht zur Drehachse des Brennerkopfes verlaufenden Führung querverstellbar, damit die Schweisselektrode und die Zusatzdrahtdüse gemeinsam auf den Durchmesser des einzuschweissenden Rohres eingestellt werden können. Diese Querführung ist ihrerseits auf einer im Abstand von der Drehachse des Brennerkopfes parallel zu dieser verlaufenden Führungsachse längsverstellbar, um den Elektrodenabstand von der Schweissnaht einstellen zu können. Ferner sind noch Verstellmöglichkeiten für die auf dem Brennerhalter angeordnete Zusatzdrahtdüse vorhanden, damit die Stelle, an welcher der Zusatzdraht zugeführt wird, relativ zu der Elektrodenspitze eingestellt werden kann.

Derartige bei Ständerschweissmaschinen zur Verringerung des Justieraufwandes für einen Automatikbetrieb vorhandene Verstellmöglichkeiten sind auch für Schweisspistolen der vorliegenden Art erwünscht. Ausser den bei der bekannten Ständerschweissmaschine verwirklichten Verstellmöglichkeiten besteht bei Schweisspistolen ein Bedarf für zusätzliche Verstellmöglichkeiten. Insbesondere sollte bei Schweisspistolen eine zusätzliche Verstellmöglichkeit zur Verstellung des Anstellwinkels der Schweisselektrode zur Drehachse des Brennerkopfes, und eine Schwenkverstellbarkeit der Zusatzdrahtdrüse relativ zu der Schweisselektrode vorhanden sein, so dass der Zusatzdraht wahlweise in unterschiedlichem Abstand seitlich der Elektrodenspitze zugeführt werden kann.

Im Gegensatz zu Ständerschweissmaschinen, wo der benötigte Raum für die Ausbildung derartiger Verstellmöglichkeiten bei hinreichend guter Führungsstabilität kein Problem bedeutet, ist der am drehbaren Brennerkopf einer Schweisspistole zur Verfügung stehende Raum beschränkt, so dass bei bekannten Schweisspistolen auf einen Teil solcher Verstellmöglichkeiten verzichtet wird.

Beispielsweise sind bei einer bekannten Schweisspistole der im einleitenden Teil des Anspruchs 1 angegebenen Art (FR-A-2 352 623) nur der Querschlitten im Brennerkopf selbst untergebracht, wohingegen die Längsverstellbarkeit des Brennerhalters durch einen Stellring mit Rechts-Linksgewinde zwischen dem Brennerkopf und dem Gehäuse der Schweisspistole verwirklicht ist.

Durch die Erfindung wird die Aufgabe gelöst, eine in der im einleitenden Teil des Anspruchs 1 angegebenen Art ausgebildete Verstellbaugruppe des drehbaren Brennerkopfes einer elektrischen Schweisspistole derart zu gestalten, dass sie mit einer minimalen Anzahl von Verstellvorrichtungen für eine Längsverstellbarkeit, Querverstellbarkeit und Schwenkverstellbarkeit des Brennerhalters und der Zusatzdrahtdüse und deren Relativverstellbarkeit in kompakter kleiner Baugrösse und gleichwohl gut zugänglich auskommt.

Da gemäss der Erfindung entsprechend des kennzeichnenden Teils des Anspruchs 1 der Schwenkhalter der Zusatzdrahtdüse auf dem Brennerhalter schwenkverstellbar abgestützt ist und dieser seinerseits um seine Schwenkachse schwenkverstellbar, in Axialrichtung des Schweisskopfes längsverstellbar und in Radialrichtung des Schweisskopfes querverstellbar ist, werden alle drei Verstellbewegungen auf die Zusatzdrahtdüse übertragen, so dass deren Nachstellung – es sei denn zur Änderung ihrer Relativstellung zur Schweisselektrode – überflüssig ist. In den meisten Fällen bleibt die Relativstellung der Zusatzdrahtdüse zur Schweisselektrode dieselbe, falls sie für vergleichbare, sich wiederholende Schweissaufgaben einmal festgelegt ist. Durch die Erfindung ist die Verstellarbeit einfach und kann in kurzer Zeit durchgeführt werden. Da die Verstellung der Schweisselektrode und der Zusatzdrahtdüse gemeinsam erfolgt, ist ausserdem die Verstellgenauigkeit erhöht, was letztlich zur Verbesserung der Schweissqualität führt. Da ferner gemäss der Erfindung für die Zusatzdrahtdüse gesonderte Verstellvorrichtungen für die Radialverstellung, die Axialverstellung und die Schwenkverstellung bei gleichbleibender Relativlage von Zusatzdrahtdüse und Elektrode entfallen, ist die Verstellbaugruppe übersichtlich und kann in kompakter kleiner Baugrösse im beengten Raum des Schweisskopfes einer Schweisspistole bei gleichwohl hoher Bedienungsfreundlichkeit gut zugänglich untergebracht werden.

Bevorzugte Ausgestaltungen der Erfindung sind Gegenstand jeweils der Ansprüche 2 und 8. Durch die Feder gemäss Anspruch 2 ist in der Axialrichtung das Lagerspiel sämtlicher Verstellvorrichtungen im wesentlichen beseitigt, so dass die Reproduzierbarkeit der Verstellvorgänge bei hoher Präzision begünstigt wird. Wenn gemäss Anspruch 5 die Feder von dem federnd ausbiegbar gestalteten Drahtführungsrohr gebildet ist, das federnd ausgebogen innerhalb des Hohlwellenabschnittes der Antriebswelle verläuft und sämtlichen Verstellungen der Verstellbaugruppe folgen kann, entfällt nicht nur eine gesonderte Feder mit ihrer Abstützvorrichtung, sondern es entstehen auch keine scharfen Knicke und Ausbiegungen im Drahtführungsrohr, so dass die Einführung des Zusatzdrahtes in die Zusatzdrahtdüse und der Vorschub des Drahtes begünstigt sind. Für die Axialverstellung wird durch die Ausbiegung des Drahtführungsrohres eine Vorratsschleife gebildet, die den Verstellweg überbrückt. Das federnd abbiegbar ausgebildete Drahtführungsrohr kann insbesondere eine Schraubenfeder sein, deren Federwindungen in der gestreckten Lage des Drahtführungsrohres ohne wesentliche Zwischenspalte aneinander anliegen.

Bei der Ausführungsform nach Anspruch 4 ist für die Drahtzuführdüse zusätzlich zu ihrer Schwenkverstellbarkeit relativ zur Schweisselektrode ihre einfache Längsverstellbarkeit gegeben. Die Stellmutter auf dem Gewindeschaft der Drahtzuführdüse dient als Endanschlag, durch welchen die eingestellte Lage der Drahtzuführdüse definiert ist.

Die Stellvorrichtung des Längsschlittens in Form einer Exzenterscheibe gemäss Anspruch 6 gestattet bei kleiner Baugrösse eine hohe Verstellgenauigkeit. Am Ende des Exzenterzapfens oder in dessen Verlängerung an der ihm abgewandten Seite der Exzenterscheibe ist ein Betätigungskopf ausgebildet, beispielsweise ein Vierkant, an welchem die Exzenterscheibe zur Längsverstellung des Längsschlittens um die Achse des Exzenterzapfens verdreht werden kann.

Für sämtliche Verstellvorrichtungen sind vorzugsweise entsprechende Skalen vorgesehen. Die zusätzliche Skala nach Anspruch 8 ist vorteilhaft, weil dadurch der Radialabstand der als Zeiger mit der Skala zusammenwirkenden Elektrodenspitze von der Drehachse des Brennerkopfes auch dann abgelesen werden kann, wenn nach entsprechender Schwenkverstellung des Brennerhalters die Schweisselektrode einen Winkel mit der Axialrichtung bildet und daher der am Querschlitten abgelesene Zahlenwert nicht mit dem tatsächlichen Radialabstand der Elektrodenspitze von der Drehachse des Brennerkopfes übereinstimmt.

Die Erfindung wird anhand einer bevorzugten Ausführungsform erläutert, die aus der Zeichnung in ihren Einzelheiten ersichtlich ist.

In der Zeichnung zeigt:

Fig. 1 eine teilweise geschnittene Stirnansicht einer elektrischen Schweisspistole von vorn,

Fig. 2 den Längsschnitt durch den vorderen, den Brennerkopf enthaltenden Teil des Rohres der Schweisspistole entsprechend der Schnittlinie in Fig. 1, wobei Teile der Verstellbaugruppe zur Verstellung des Brenners im Schnitt dargestellt sind,

Fig. 3 eine der in Fig. 2 entsprechende Seitenansicht der Verstellbaugruppe in der Aussenansicht,

Fig. 4 die Seitenansicht der Verstellbaugruppe in der Aussenansicht von der entgegengesetzten Seite her als in Fig. 3,

Fig. 5 die Draufsicht auf die Verstellbaugruppe entsprechend der Ansicht von oben in Fig. 4,

Fig. 6 die entsprechende Ansicht der Verstellbaugruppe von unten in Fig. 4,

Fig. 7 den Schnitt entsprechend der Schnittlinie in Fig. 5 und

Fig. 8 die Stirnansicht des Brennerkopfes von vorn.

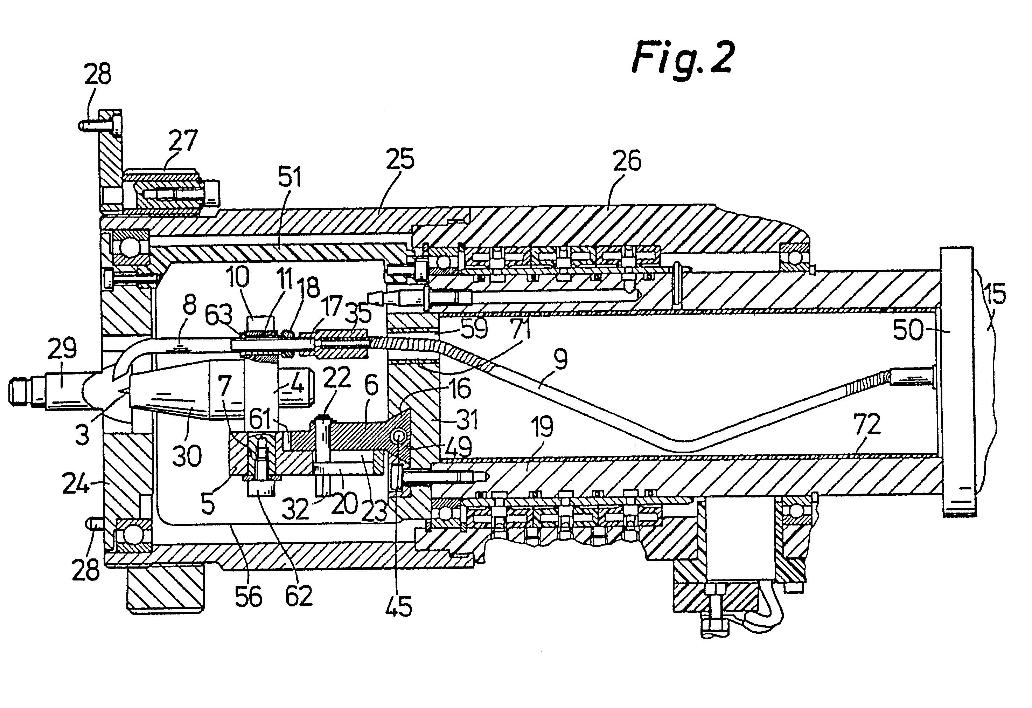

Die elektrische Schweisspistole 2 weist am vorderen Ende ihres rohrförmigen Gehäuses 25, 26 den Brennerkopf 1 auf, der um die Achse des rohrförmigen Gehäuses drehbar angetrieben ist und eine Schweisselektrode 3 mit einer diese umgebenden Schutzgasdüse 30 sowie eine Zusatzdrahtdüse 8 aufweist, durch welche der durch ein Drahtführungsrohr 9 zugeführte Schweisszusatzdraht an die Schweisselektrode 3 herangeführt ist. Die Schweisselektrode 3 mit der Schutzgasdüse 30 und der Zusatzdrahtdüse 8 sind radial und axial zur Drehachse des Brennerkopfes 1 sowie um eine senkrecht zu der Drehachse verlaufende Schwenkachse gemeinsam in einer die Drehachse enthaltenden Ebene schwenkverstellbar. Ausserdem ist die Zusatzdrahtdüse 8 gegenüber der Schweisselektrode 3 längsverstellbar und schwenkverstellbar. Für diese Verstellungen weist der Brennerkopf 1 eine Verstellbaugruppe auf, über welche die Schweisselektrode 3 mit ihrer Schutzgasdüse 30 und die Zusatzdrahtdüse 8 an einer Stirnplatte 31 (Fig. 2) abgestützt sind, die am vorderen Ende eines Hohlwellenabschnittes 19 der Antriebswelle 15 angeflanscht ist.

Die Verstellbaugruppe weist einen Querschlitten 6 auf, der mit seinem Schlittenfuss 49 in einer Führungsnut 16 der Stirnplatte 31 mittels einer Stellspindel 45 parallel zu einer Radialebene des Brennerkopfes längsverstellbar ist. Auf dem Querschlitten 6 ist ein Längsschlitten 5 parallel zur Drehachse des Brennerkopfes verstellbar. Auf dem Längsschlitten 5 ist ein die Schweisselektrode 3 mit ihrer Schutzgasdüse 30 aufnehmender Brennerhalter 4 um eine senkrecht zur Drehachse des Brennerkopfes und zur Verstellrichtung des Querschlittens 6 verlaufende Achse 7 schwenkverstellbar. Auf dem Brennerhalter 4 ist ein Schwenkhalter 11 für die Zusatzdrahtdüse 8 um eine parallel zur Schwenkachse 7 des Brennerhalters 4 verlaufende Schwenkachse 10 schwenkverstellbar abgestützt.

Die Zusatzdrahtdüse 8 ist im Schwenkhalter 11 ausserdem längsverstellbar. Auf das hintere Ende ihres Schaftes ist das Kupplungsende des Drahtführungsrohres 9 aufgeschraubt, welches berührungsfrei durch ein Langloch 59 in der Stirnplatte 31 hindurchläuft. Das Drahtführungsrohr 9 ist flexibel und verläuft in dem Hohlwellenabschnitt 19 der Antriebswelle 15 ausgebogen, so dass es allen Verstellbewegungen der Zusatzdrahtdüse 8 folgen kann.

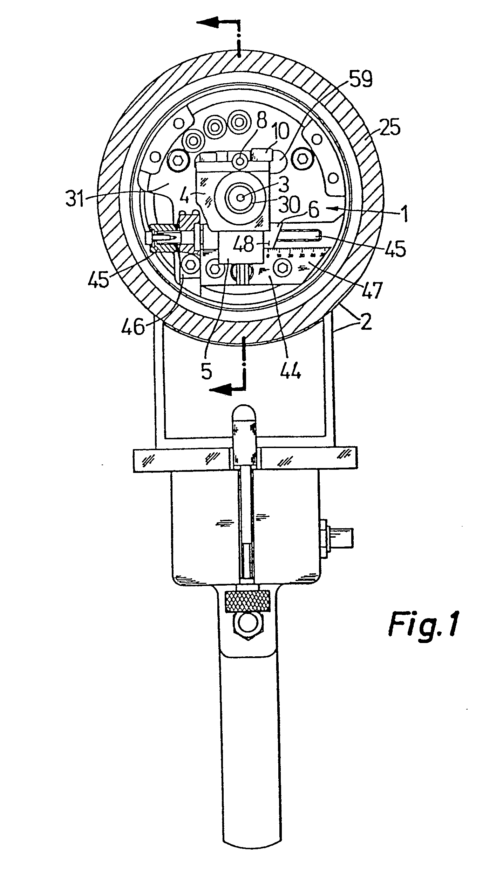

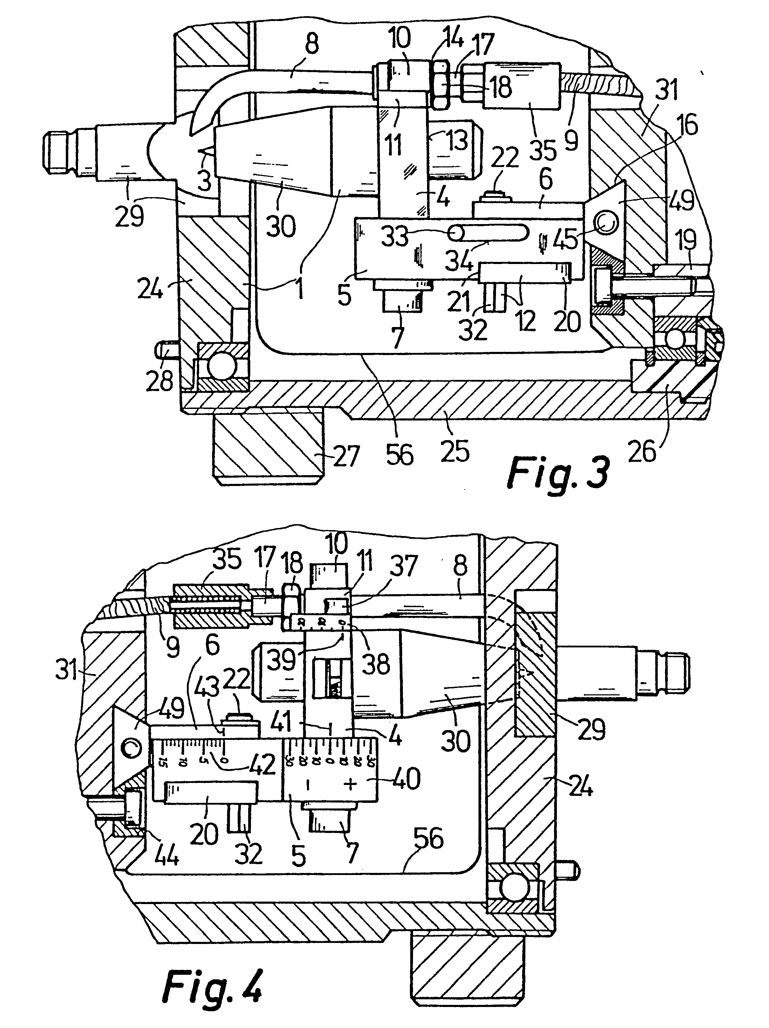

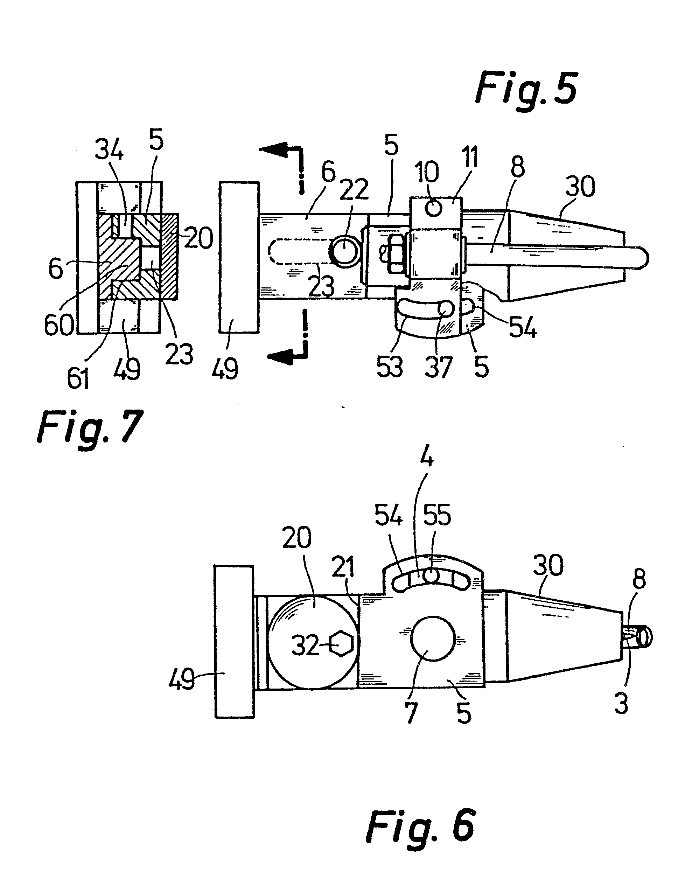

Die durch den Schlittenfuss 49 verlaufende Stellspindel 45 des Querschlittens 6 ist in einem Spindelbock 46 (Fig. 1) abgestützt, der an der Stirnplatte 31 festgelegt ist. Wie aus den Fig. 3 bis 7 ersichtlich, ist der Querschlitten 6 im Querschnitt T-förmig und bildet mit seinem T-Fuss eine Führungsrippe 60 (Fig. 7), die gleitend in eine längs des Längsschlittens 5 in diesem ausgebildete Führungsnut 61 past. In der einen Seitenwand der Führungsnut 61 verläuft im Längsschlitten 5 ein parallel zur Führungsnut 61 verlaufendes Führungslangloch 34 für einen seitlich in die Führungsrippe 60 des Querschlittens 6 eingeschraubten Führungsstift 33 (Fig. 3), der vom Schaft einer Feststellschraube gebildet ist, mit welcher der Längsschlitten in der eingestellten Lage an dem Querschlitten festgelegt werden kann. Im Boden der Führungsnut 61 verläuft ausserdem ein Führungsschlitz 23, durch welchen ein Exzenterzapfen 22 einer mit diesem die Stellvorrichtung 12 für die Verstellung des Längsschlittens 5 gegenüber dem Querschlitten 6 bildenden Exzenterscheibe 20 gleitend hindurchragt. Der Exzenterzapfen 22 ist in einer Bohrung (Fig. 2) des Querschlittens 6 drehbar gelagert und axial mittels eines Sprengringes am freien Ende des Exzenterzapfens 22 am Querschlitten 6 festgelegt. Die Exzenterscheibe 20 ist gleitend in einer Quernut 21 (Fig. 6) in der der Führungsnut 61 abgewendeten Unterseite des Längsschlittens 5 aufgenommen, so dass sie mit ihrem Umfangsrand an den Seitenflächen der Quernut 21 anliegt. Mittels der Exzenterscheibe 20 und des Führungsstiftes 33 werden somit der Längsschlitten 5 der Querschlitten 6 zusammengehalten, der mit seinen Seitenflanschen gleitend an der der Quernut 21 des Längsschlittens 5 abgewendeten Seite desselben an dem Längsschlittens 5 anliegt. Koaxial mit dem Exzenterzapfen 22 ist an der diesem abgewendeten Seite der Exzenterscheibe 20 ein Betätigungskopf 32 in Form eines Vierkantes zur Verstellung der Exzenterscheibe 20 um ihren Exzenterzapfen 22 und damit zur Längsverstellung des Längsschlittens 5 gegenüber dem Querschlitten 6 durch das Zusammenwirken der Umfangsfläche der Exzenterscheibe 20 mit den Seitenwänden der Quernut 21 ausgebildet.

An dem dem Querschlitten 6 abgewendeten Ende des Längsschlittens 5 ist der Brennerhalter 4 mit seiner Schwenkachse 7 schwenkverstellbar abgestützt. Im Abstand von der Schwenkachse 7 ist ein kreisbogensegmentförmig verlaufendes Langloch 54, dessen Krümmungsmittelpunkt mit der Schwenkachse 7 zusammenfällt, in dem Längsschlitten 5 ausgebildet. In dem Langloch 54 ist ein vom Schaft einer Feststellschraube gebildeter Führungsstift 55 des Brennerhalters 4 gleitend gelagert. Am freien Ende der Schwenkachse 7 ist eine Befestigungsschraube 62 (Fig. 2) zur axialen Festlegung der im Längsschlitten drehbaren Schwenkachse 7 angebracht.

Oberhalb der in den Brennerhalter 4 mit der Schutzgasdüse 30 eingeklemmten Elektrode 3 ist auf dem Brennerhalter 4 der Schwenkhalter 11 um eine parallel zur Schwenkachse 7 des Brennerhaltes 4 verlaufende Schwenkachse 10 schwenkverstellbar abgestützt.

Im Abstand von der Schwenkachse 10 ist im Schwenkhalter 11 ein kreisbogensegmentförmiges Langloch 53 (Fig. 5) ausgebildet, dessen Krümmungsmittelpunkt mit der Schwenkachse 10 zusammenfällt und durch welches die Spannschraube 37 hindurchläuft, mit welcher der Brenner im Brennerhalter 4 lösbar verklemmt werden kann und welche gleichzeitig zur Festlegung des Schwenkhalters 11 in seiner jeweiligen Schwenklage dient.

Der Schwenkhalter 11 weist eine Bohrung auf, in welcher eine Isolierbuchse 63 (Fig. 2) sitzt, durch welche die aus einem Kupferrohr ausgebildete Zusatzdrahtdüse 8 mit ihrem Gewindeschaft 17 gegenüber dem Brennerhalter 4, der im Schweissbetrieb auf Schweissspannung liegt, elektrisch isoliert hindurchgeführt ist. Das Ende des Gewindeschaftes 17 der Zusatzdrahtdüse 8 ist mit einer Kupplungshülse 35 verschraubt, in welchem das zugeordnete Ende des Drahtführungsrohres 9 festgelegt ist. Zwischen der Kupplungshülse 35 und dem Schwenkhalter 11 sitzt eine Stellmutter 18, die einen mit der Rückseite 14 (Fig. 3) des Schwenkhalters 11 zusammenwirkenden Anschlag bildet, der die Längsstellung des Drahtzuführrohrs 8 bestimmt, die durch entsprechende Schraubverstellung der Stellmutter 18 einstellbar ist. Die Isolierbuchse 63 steht etwas über die Rückseite des Schwenkhalters 11 zur elektrischen Isolierung der Stellmutter 18 hinaus.

Das federnd verbiegbar aus einer Stahlzugfeder ausgebildete Drahtführungsrohr 9 ist mit seinem der Kupplungshülse 35 abgewendeten Ende an dem dem Brennerkopf abgewendeten Ende des Hohlwellenabschnittes 19 der Antriebswelle 15 axial abgestützt. Da das Drahtführungsrohr 9 federnd ausbiegbar ist und innerhalb des Hohlwellenabschnittes 19 zu einer flachen Schleife ausgebogen verläuft, entsteht an der Kupplungshülse 35 eine axial verlaufende Federkraft, durch welche über die Kupplungshülse 35 und den damit verschraubten Gewindeschaft 17 der Drahtzuführdüse 8 deren Stellmutter 18 gegen die Rückseite des Schwenkhalters 11 gedrückt wird. Ausserdem wird diese Federkraft auf den Brennerhalter 4, den Längsschlitten 5, deren Stellvorrichtung 12 und den Querschlitten 6 übertragen, so dass in der Axialrichtung der Federkraft jegliches Lagerspiel in der Verstellbaugruppe beseitigt ist. Zur elektrischen Isolierung des Drahtführungsrohres 9 sind in das Langloch 59 (Fig. 2) eine Isolierbuchse 71, und in den Hohlwellenabschnitt 19 ein Isolierrohr 72 eingesetzt.

Der Brennerkopf ist in einem Schutzrohr 25 untergebracht, welches stirnseitig auf die Nabe 26 der Antriebswelle 15, 19 aufgeschraubt ist und beidseitig jeweils ein verhältnismässig grosses Fenster 56 aufweist, so dass die Verstellbaugruppe des Brennerkopfes 1 gut zugänglich ist und die an den Verstellvorrichtungen angebrachten Skalen abgelesen werden können. Die Skala 47 (Fig. 1) des Querschlittens 6 ist an einer mit der Stirnplatte 31 verschraubten, die Führungsnut für den Schlittenfuss 49 des Querschlittens 6 an der Unterseite begrenzenden Führungsleiste 4 angebracht. Der Querschlitten 6 weist einen mit der Skala 47 zusammenwirkenden Markierungsstrich 48 auf. Die Anzeigeskalen für die Axialstellung des Brenners, dessen Schwenkstellung und die Schwenkstellung des Schwenkhalters 11 gegenüber dem Brennerhalter 4 sind sämtlich an derselben Seite der Verstellbaugruppe angebracht (Fig. 4). Die Skala 42 für die Axialstellung des Brenners ist an dem Längsschlitten 5 ausgebildet, während an dem Querschlitten der zugeordnete Markierungsstrich 43 ausgebildet ist. Die Skala 40 für die Schwenkstellung des Brenners ist ebenfalls am Längsschlitten 5 ausgebildet und wirkt mit einem entsprechenden Markierungsstrich 41 am Brennerhalter 4 zusammen. Entsprechend ist die Skala 38 für die Relativschwenkstellung der Zusatzdrahtdüse 8 zur Schweisselektrode an einer Stirnfläche des Schwenkhalters 11 angebracht und wirkt mit einem zugeordneten Markierungsstrich 39 am Brennerhalter 4 zusammen.

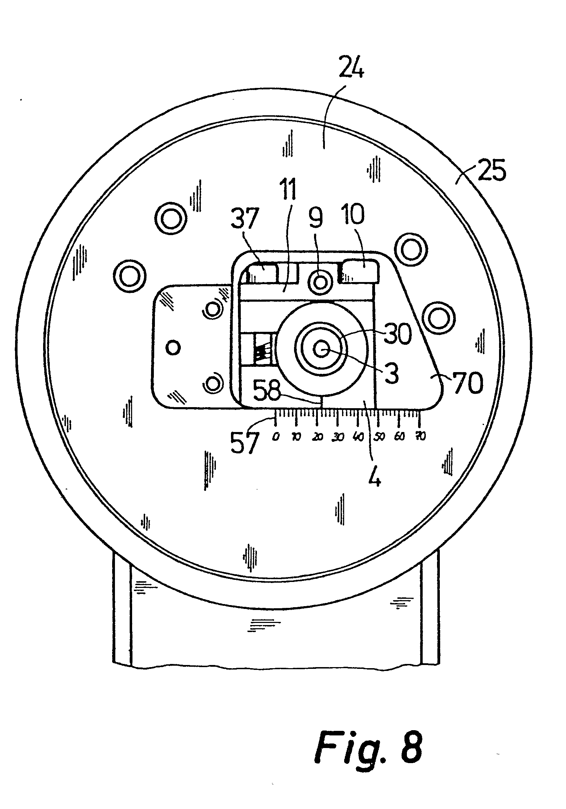

Vorn auf dem Schutzrohr 25 sind Axialstützen 28 (Fig. 2) mittels eines Stellrings 27 axial verstellbar abgestützt. Die Axialstützen 28 bilden den Axialabstand der Schweisselektrode zu einer Schweissstelle bestimmende Anschläge beispielsweise für das stirnseitige Einschweissen von Rohren eines Rohrbündelwärmetauschers in dessen Rohrplatte. Hierbei wird der Brennerkopf an einem in das einzuschweissende Rohr gesteckten Zentrierdorn zentriert, der auf einen Zentrierdornhalter 29 geschraubt wird, welcher mit dem Stirndeckel 24 des Brennerkopfes verschraubt ist. Der Stirndeckel 24 ist über ein Abstandssegment 51 (Fig. 2) mit der Stirnplatte 31 der Antriebswelle 15, 19 des Brennerkopfes drehfest verbunden und in einem Kugellager im vorderen Ende des Schutzrohres 25 drehbar gelagert, so dass er sich mit dem Brennerkopf um dessen Drehachse dreht. Wie aus Fig. 8 ersichtlich, weist der Stirndeckel 24 ein Stirnfenster 70 für den Brenner auf. Das Fenster 70 verläuft mit seinem einen Rand parallel zur Verstellrichtung des Querschlittens 6 des Brennerkopfes und der Schwenkebene des Brennerhalters 4. An diesem Rand ist eine zusätzliche Skala 57 angebracht, an welcher ein Markierungsstrich 58 am Brennerhalter 4 oder einer von diesem abstehenden Anzeigezunge oder die Spitze der Schweisselektrode 3 als Zeiger zusammenwirkt. Dadurch kann der Radialabstand der Spitze der Schweisselektrode 3 von der Drehachse des Brennerkopfes unmittelbar an der Skala 57 abgelesen werden, wenn der Brennerhalter 4 auf seiner Null-Lage herausgeschwenkt ist und daher der aktuell vorliegende Radialabstand der Elektrodenspitze von der Drehachse nicht mit dem an der Skala 47 (Fig. 1) abgelesenen Skalenwert übereinstimmt, der den Radialabstand der Schwenkachse 7 des Brennerhalters 4 angibt. Durch Anpeilung der Mündung der Drahtzuführdüse 8 kann auch die Stellung der Düsenmündung an der Skala 57 abgelesen werden.

**Patentansprüche**

1. Verstellbaugruppe des drehbaren Brennerkopfes (1) einer elektrischen Schweisspistole, der einen die Schweisselektrode (3) abstützenden Brennerhalter (4), der parallel zur Drehachse des Brennerkopfes (1) längsverstellbar ist und mittels eines Querschlittens (6) senkrecht zur Drehachse des Brennerkopfes (1) querverstellbar ist, und eine Zusatzdrahtdüse (8) am Ende eines Drahtführungsrohres (9) aufweist, die gemeinsam mit dem Brennerhalter (4) parallel zur Drehachse des Brennerkopfes (1) längsverstellbar ist, dadurch gekennzeichnet, dass die Zusatzdrahtdüse (8) in einem Schwenkhalter (11) gehalten ist, der um eine Schwenkachse, die senkrecht zur Drehachse des Brennerkopfes (1) und zur Verstellrichtung des Querschlittens (6) verläuft, schwenkverstellbar auf dem Brennerhalter (4) angeordnet ist, der um eine Schwenkachse, die senkrecht zur Drehachse des Brennerkopfes (1) und zur Verstellrichtung des Querschlittens (6) verläuft, schwenkverstellbar auf einem Längsschlitten (5) gehalten ist, der parallel zur Drehachse des Brennerkopfes (1) längsverstellbar auf dem Querschlitten (6) angeordnet ist.

2. Verstellbaugruppe nach Anspruch 1, dadurch gekennzeichnet, dass zwischen der der Schweisselektrode (3) abgewendeten Rückseite (13) des Brennerhalters (4) oder vorzugsweise der Rückseite (14) des Schwenkhalters (11) der Zusatzdrahtdüse (8) und der Antriebswelle (15) des Brennerkopfes (1), an deren Stirnseite der Querschlitten (6) in einer unterschnittenen Führungsnut (16) geführt ist, eine Feder (Drahtführungsrohr 9) eingespannt ist, deren Federkraft im wesentlichen parallel zur Drehachse des Brennerkopfes (1) wirkt.

3. Verstellbaugrupe nach Anspruch 1 oder 2, dadurch gekennzeichnet, dass die Zusatzdrahtdüse (8) an ihrem durch den Schwenkhalter (11) hindurchverlaufenden Schaft (17) senkrecht zu der Schwenkachse (10) des Schwenkhalters (11) längsverstellbar in diesem geführt ist.

4. Verstellbaugruppe nach den Ansprüchen 2 und 3, dadurch gekennzeichnet, dass der Schaft der Zusatzdrahtdüse ein Gewindeschaft (17) ist, der in dem Schwenkhalter (11) verschiebbar geführt ist und auf den an der Rückseite (14) des Schwenkhalters (11) eine Stellmutter (18) geschraubt ist, an welcher die Zusatzdrahtdüse (8) unter dem Druck der Feder (Drahtführungsrohr 9) gegen die Rückseite (14) des Schwenkhalters (11) gedrückt ist.

5. Verstellbaugruppe nach Anspruch 2 oder 4, dadurch gekennzeichnet, dass die Feder von dem mit dem Gewindeschaft (17) der Zusatzdrahtdüse (8) gekuppelten Drahtzuführungsrohr (9) gebildet ist, welches federnd verbiegbar ausgebildet ist und federnd ausgebogen zwischen dem Gewindeschaft (17) der Zusatzdrahtdüse (8) und dem dem Brennerkopf (1) abgewendeten Ende eines Hohlwellenabschnittes (19) der Antriebswelle (15) des Brennerkopfes (1) eingespannt ist.

6. Verstellbaugruppe nach einem der Ansprüche 1 bis 5, dadurch gekennzeichnet, dass die Stellvorrichtung (12) des Längsschlittens (5) eine Exzenterscheibe (20) aufweist, die in einer senkrecht zur Verstellrichtung des Längsschlittens (5) verlaufenden Quernut (21) desselben angeordnet und mit ihrem senkrecht zur Verstellrichtung des Längsschlittens (5) und des Querschlittens (6) abstehenden Exzenterzapfen (22) einen in der Verstellrichtung des Längsschlittens (5) verlaufenden Führungsschlitz (23) durchgreift und in dem Querschlitten (6) drehbar abgestützt ist.

7. Verstellbaugruppe nach den Ansprüchen 2, 4 und 6, dadurch gekennzeichnet, dass die Schwenkachse (7) des Brennerhalters (4), die Achse des Exzenterzapfens (22) und die Achse des Gewindeschaftes (17) der Zusatzdrahtdüse (8) in einer gemeinsamen Ebene liegen.

8. Verstellbaugruppe nach einem der Ansprüche 1 bis 7, dadurch gekennzeichnet, dass an dem brennerseitigen, mit dem Brennerkopf (1) drehbaren Stirndeckel (24) der Schweisspistole (2) eine parallel zur Verstellrichtung des Querschlittens (6) verlaufende Skala (57) ausgebildet ist, an welcher die Querverstellung der Schweisselektrode (3) ablesbar ist.

## Claims

1. Adjusting group of the rotating burner head (1) of an electric welding torch comprising a burner-holder (4) which supports the welding electrode (3) and which is longitudinally adjustable in parallel to the axis of rotation of the rotary burner head (1) and is transversally adjustable perpendicular to the axis of rotation of the burner head (1) by means of a cross-slide (6), and which comprises a filler wire nozzle (8) disposed at the end of a tubular wire-guide (9) which nozzle is longitudinally adjustable together with the burner-holder (4) parallel to the axis of rotation of the rotary burner head (1), characterised in that the filler wire nozzle (8) is held in a pivoting holder (11) which is arranged on the burner holder (4) in a pivotally adjustable manner about a pivot axis extending perpendicularly to the axis of rotation of the rotary burner head (1) and to the direction of adjustment of the cross-slide (6), the burner holder (4) being held on a longitudinal slide (5) in a pivotally adjustable manner about a pivot axis extending perpendicular to the axis of rotation of the burner head (1) and to the direction of adjustment of the cross-slide (6), the longitudinal slide (5), being arranged on the cross-slide (6) to be longitudinally adjustable in parallel to the axis of rotation of the burner head (1).

2. Adjusting group according to claim 1, characterised in that a spring (wire supply pipe 9) is fixed between the reverse side (13) of the burner-holder (4) remote from the welding electrode (3) or preferably the reverse side (14) of the filler wire nozzle (8) and the drive shaft (15) of the rotary burner head (1) on the obverse side of which the cross-slide (6) is guided in an undercut guide groove (16), the biasing force of the spring being exerted essentially parallel to the axis of rotation of the rotary burner head (1).

3. Adjusting group according to claim 1 or 2, characterised in that the filler nozzle (8) is guided on its shaft (17) extending through the pivoting holder (11) longitudinally adjustable in the pivoting holder perpendicularly to the pivot shaft (10) of the pivoting holder (11).

4. Adjusting group according to claims 2 and 3, characterised in that the shaft of the filler wire nozzle (8) is a threaded shaft (17) slidably guided in the pivoting holder (11) on the reverse side of which an adjusting nut (18) is threaded, at which the filler wire nozzle (8) is pressed against the reverse side (17) of the pivoting holder (11) under the bias of the spring (wire guide pipe 9).

5. Adjusting group according to claim 2 or 4, characterised in that the spring consists of the wire supply pipe (9) coupled to the threaded shaft (17) of the filler wire nozzle (8), the wire guide pipe (9) being flexibly bendably constructed and being snapped into place in a flexibly bent-out state between the threaded shaft (17) of the filler wire nozzle (8) and that end of a hollow shaft section (19) of the drive shaft (15) of the rotary burner head (1) which is remote from the burner head (1).

6. Adjusting group according to any of claims 1 to 5, characterised in that the adjusting device (12) of the longitudinal slide (5) is provided with an eccentric disc (20) which is arranged in a transverse slot (21) of the longitudinal slide (5) and which with its eccentric pin (22) projecting from the cross-slide (6) perpendicularly to the direction of adjustment of the longitudinal slide (5) penetrates through a guide slot (23) running along the direction of adjustment of the longitudinal slide (5), and is rotatably supported in the cross-slide (6).

7. Adjusting group according to claim 1, 2 and 6, characterised in that the pivot shaft (7) of the burner-holder (4), the axis of the eccentric pin (22) and the axis of the treaded shaft (17) of the filler wire nozzle (8) are coplanar.

8. Adjusting group according to any of claims 1 to 7, characterised in that a scale (57) for reading off the transverse adjustment of the welding electrode (3) and extending parallel to the direction of adjustment of the cross-slide (6) is formed in a cover plate (24) of the welding torch (2) on the burner side thereof, the cover plate being rotatable together with the rotary burner head (1).

## Revendications

1. Groupe de réglage de déplacement de la tête de torche tournante (1) d'un pistolet de soudage électrique, qui comporte un support de torche (4) soutenant l'électrode de soudage (3) et réglable longitudinalement parallèlement à l'axe de rotation de la tête de torche (1) et en outre transversalement au moyen d'un chariot transversal (6) perpendiculairement à l'axe de rotation de la tête de soudage (1), ainsi qu'une buse de fil d'apport (8) placée à l'extrémité d'un tube de guidage de fil (9), qui est déplaçable longitudinalement en même temps que le support de torche (4) parallèlement à l'axe de rotation de la tête de torche (1), caractérisé en ce que la buse de fil d'apport (8) est maintenue dans un support pivotant (11), qui est disposé, avec possibilité de pivotement autour d'un axe de pivotement qui est orienté perpendiculairement à l'axe de rotation de la tête de torche (1) et à la direction de déplacement du chariot transversal (6), sur le support de torche (4) qui est maintenu, avec possibilité de pivotement autour d'un axe de pivotement qui est orienté perpendiculairement à l'axe de rotation de la tête de torche (1) et à la direction de déplacement du chariot transversal (6), sur un chariot longitudinal (5) qui est disposé sur le chariot transversal (6) avec possibilité de déplacement longitudinal parallèlement à l'axe de rotation de la tête de torche (1).

2. Groupe de réglage de déplacement selon la revendication 1, caractérisé en ce que, entre la face arrière (13), opposé à l'électrode de soudage (3), du support de torche (4), ou bien de préférence la face arrière (14) du support pivotant (11) de la buse de fil d'apport (8) et l'arbre d'entraînement (15) de la tête de torche (1), sur le côté frontal duquel le chariot transversal (6) est guidé dans une rainure de guidage détalonnée (16), est maintenu sous contrainte un ressort (tube de guidage de fil 9) dont la force élastique agit de façon sensiblement parallèle à l'axe de rotation de la tête de torche (1).

3. Groupe de réglage de déplacement selon la revendication 1 ou 2, caractérisé en ce que la buse de fil d'apport (8) est guidée, par sa tige (17) traversant le support pivotant (11) perpendiculairement à l'axe de pivotement (10) du support pivotant (11), de façon à coulisser longitudinalement dans celui-ci.

4. Groupe de réglage de déplacement selon les revendications 2 et 3, caractérisé en ce que la tige de la buse de fil d'apport est une tige filetée (17), qui est guidée avec possibilité de translation dans le support pivotant (11) et sur laquelle est vissé, sur la face arrière (14) du support pivotant (11) un écrou de réglage (18) par lequel la buse de fil d'apport (8) est poussée, sous la pression du ressort (tube de guidage de fil 9), contre la face arrière (14) du support pivotant (11).

5. Groupe de réglage de déplacement selon la revendication 2 ou 4, caractérisé en ce que le ressort est constitué par le tube d'admission de fil (9) accouplé à la tige filetée (17) de la buse de fil d'apport (8) et qui est susceptible de fléchir élastiquement tout en étant maintenu de façon élastiquement infléchie entre la tige filetée (17) de la buse de fil d'apport (8) et l'extrémité, opposée à la tête de torche (1), d'une partie creuse (19) de l'arbre d'entraînement (15) de la tête de torche (1).

6. Groupe de réglage de déplacement selon l'une des revendications 1 à 5, caractérisé par le fait que le dispositif de déplacement (12) du chariot longitudinal (5) présente un disque excentrique (20) qui est disposé dans une rainure transversale (21) dudit chariot, perpendiculaire à la direction de déplacement du chariot longitudinal (5) et qui, grâce à son tourillon excentrique (22) saillant, perpendiculaire à la direction de déplacement du chariot longitudinal (5) et du chariot transversal (6), est en prise avec une rainure de guidage (23) courant dans la direction de déplacement du chariot longitudinal (5), ledit tourillon (22) étant monté à rotation sur le chariot transversal (6).

7. Groupe de réglage de déplacement selon les revendications 2, 4 et 6, caractérisé par le fait que l'axe du tourillon excentrique (22) et l'axe de la tige filetée (17) de la buse de fil d'apport (8) sont disposés dans la même plan.

8. Groupe de réglage de déplacement selon l'une des revendications 1 à 7, caractérisé par le fait que le couvercle frontal (24) du pistolet de soudage électrique (2), situé du côté de la torche et tournant avec la tête de torche (1) présente une échelle (57), disposée parallèlement à la direction de déplacement du chariot transversal (6), sur laquelle est lisible le réglage en déplacement latéral de l'électrode de soudage (3).

*Fig.1*

*Fig.2*

0 047 000

**Fig. 3**

**Fig. 4**

*Fig. 5*

*Fig. 7*

*Fig. 6*

**Fig. 8**